(19) Europäisches Patentamt
European Patent Office
Office européen des brevets

(11) Veröffentlichungsnummer: **0 254 165**
**B1**

(12) **EUROPÄISCHE PATENTSCHRIFT**

(45) Veröffentlichungstag der Patentschrift: **16.01.91**

(51) Int. Cl.⁵: **B 01 J 32/00, B 01 D 53/36**

(21) Anmeldenummer: **87110047.5**

(22) Anmeldetag: **11.07.87**

(54) Bei hohen Temperaturen beständige Katalysator-Formkörper und Verfahren zu deren Herstellung.

(30) Priorität: **23.07.86 DE 3624934**

(43) Veröffentlichungstag der Anmeldung:
**27.01.88 Patentblatt 88/04**

(45) Bekanntmachung des Hinweises auf die
Patenterteilung:
**16.01.91 Patentblatt 91/03**

(84) Benannte Vertragsstaaten:
**AT BE CH DE ES FR GB GR IT LI NL SE**

(56) Entgegenhaltungen:
**EP-A-0 025 900**
**EP-A-0 203 284**
**GB-A- 343 441**
**GB-A-2 070 957**

(73) Patentinhaber: **Hüls Troisdorf Aktiengesellschaft**
**Postfach 11 65**
**D-5210 Troisdorf (DE)**

(72) Erfinder: **Gasper, Bertram**
**Im Feldbruch 69**
**D-5210 Troisdorf-Spich (DE)**
Erfinder: **Neuschäffer, Karlheinz, Dr.**
**Böttnerstrasse 6**
**D-5653 Leichlingen (DE)**
Erfinder: **Spielau, Paul, Dr.**
**Van-Gogh-Platz 10**
**D-5210 Troisdorf-Eschmar (DE)**

Courier Press, Leamington Spa, England.

## Beschreibung

Die Erfindung betrifft homogen in einen Träger verteilte Katalysatoren und Träger mit Katalysatoren auf der Oberfläche in der Gestalt von besonders Hohlkörpern, Wabenkörpern oder ggf. Granulaten, die aus anorganischen Formmassen, welche selbsthärtend sind oder bei niedrigen Temperaturen gehärtet werden, entstanden sind.

Weiterhin betrifft die Erfindung ein Verfahren zur Formgebung solcher Katalysator-Formkörper aus härtbaren Formmassen zu den temperaturbeständigen Formkörpern mit dem enthaltenen Katalysator bzw. mit nachträglich oberflächlich aufgebrachtem Katalysator.

Die Katalysator-Formkörper eignen sich für alle dem jeweiligen Katalysator zugängige Zwecke. Großformatige Katalysator-Formkörper mit enthaltenen, im wesentlichen parallelen Hohlkanälen sind ein besonderer Gegenstand der Erfindung. Diese eignen sich z.B. zur Entstickung, d.h. zur Entfernung von Stickoxiden aus Verbrennungsabgasen von Kraftwerken oder Motoren.

Nach dem Stand der Technik werden keramische oder metallische Formkörper verwendet, welche üblicherweise zur Vergrößerung der Oberfläche eine Zwischenschicht (wash coat) besitzen und welche mit geeigneten Katalysatoren dotiert sind. Katalysatoren mit Gehalten von Edelmetall findet vor allen Dingen Verwendung zur gleichzeitigen Beseitigung von Stickoxiden, Kohlenmonoxid und Resten von Kohlenwasserstoffen bei Kraftfahrzeugmotoren, wobei die Edelmetalle mit Hilfe einer Zwischenschicht aus — $Al_2O_3$ auf der Oberfläche von Hohlkörpern angeordnet sind. Katalysatoren auf Basis von Oxiden oder Sulfiden der Metalle Vanadium, Molybdän, Wolfram, Kupfer, Nickel, Kobalt, Eisen, Titan, Zirkon, Cer oder seltenen Erdmetallen sowie Mischkatalysatoren aus diesen Metallen mit Gehalten von Aluminium oder Silicium werden auf Trägern oder trägerlos bei stationären Verbrennungsmotoren oder in Verbrennungskraftwerken eingesetzt, wobei eine Zugabe von Ammoniak in mindestens äquivalente Menge zu den Stickoxiden zu erfolgen hat (DE—C—24 34 416). Auch Molekularsiebe sind als Katalysatoren einsetzbar. Nachteilig ist die Notwendigkeit, erhebliche Mengen Ammoniak als Reduktionsmittel des Stickoxids zu verwenden.

Übliche Träger bestehen z.B. aus keramischen Massen, welche erste durch einen Brennprozess bei Temperaturen von mindestens 800°C, zumeist 1.100 bis 1.200°C, die erforderliche Festigkeit erhalten. Andere Trägermaterialien sind zementartig härtende Stoffe, Graphit, Oxide, Sintergläser, Zeolithe o. dgl., welche durch Schmelzen, Sintern oder härtende Bestandteile die erforderliche Festigkeit erhalten und die gegebene Form bei Benutzung behalten. Katalysator-Formkörper für den Gebrauch bei hohen Temperaturen haben jedoch nur dann ausreichende Standfestigkeit, wenn hochtemperaturfeste Materialien in schwierigen Formgebungsverfahren oder keramische Stoffe mit der Erfordernis hoher Brenntemperature oder besonders aufwendige Herstellverfahren verwendet werden. Besonders schwierig ist die Herstellung großformatiger Katalysatoren mit enthaltenen Hohlkanälen.

Es bestand daher die Aufgabe, Katalysator-Formkörper herzustellen, deren Trägermaterialien eine geeignete Formgebung zu Hohlkörpern oder ggf. Granulaten gestatten und welche bei hohen Temperaturen genügende Festigkeit und Temperaturbeständigkeit aufweisen. Weiter bestand die Aufgabe, den auf Trägern oder in Trägern gebrauchsfertig angeordnete Katalysator in wirksamer Form und mit Eignung für lange Benutzungsdauer bei hohen Temperaturen auf einfache Weise, mit einfachen formgebenden Verfahren und aus einfach zugängigen Ausgangsmaterialien herzustellen.

Diese Aufgaben werden erfindungsgemäß gelöst.

Gegenstand der Erfindung ist daher ein Katalysator-Formkörper, bestehend aus in einem anorganischen Formkörper homogen verteilten Katalysator oder einem auf die Oberfläche aufgebrachten Katalysator, entstanden aus einer preßfähigen oder fließfähigen Formmasse aus

a) einem Oxid-Gemisch mit Gehalten von amorphem $SiO_2$ und Aluminiumoxid und/oder

b) Elekrofilterasche aus Hochtemperatur-Steinkohle-Kraftwerken und/oder

c) kalziniertem gemahlenem Bauxit

in Menen von 0,5 bis 4,0 Gew.-Teilen der feintieiligen Komponenten a) bis c) je Gew.-Teil einer Alkalisilikatlösung mit Gehalten von 1,2 bis 2,5 Mol gelöstem $SiO_2$ je Mol $K_2O$ bzw. $Na_2O$ sowie ggf. feinteiligen Füllstoffen durch Gießen in eine Form bzw. Presen oder Extrudieren und Härten der Formmasse bei Temperaturen von 50 bis 95°C zu Formkörpern.

Es ist erfindungsgemäß insbesondere möglich und bevorzugt vorgesehen nach der Härtung bei 50 bis 95°C und ggf. nach einer Temperaturbehandlung bei 100 bis 550°C zur Entfernung von Wasser, ein Brennen des Formkörpers bei Temperaturen von 600 bis 1.550°C auszufühen, dadurch Härte und ggf. Festigkeit der Formkörper erheblich zu erhöhen.

Überraschend ist es möglich, den Katalysator oder ein Vormaterial des Katalysators in den Formkörper durch Zugabe in die Formmasse zu inkorporieren, ohne die Wirksamkeit des Katalysators zu beeinträchtigen. Durch den aus der Formmasse durch Selbsthärtung bei geringen Temperaturen entstehenden Formkörper ist es möglich, dem Katalysator-Formkörper die gewünschte Form, insbesondere die eines Formkörpers mit Hohlkanälen zu geben. Die alkalische Formmasse ermöglicht es auch, durch Zugabe von amorphen Metallen, wie besonders Aluminium als Pulver, geschäumte Katalysator-Formkörper herzustellen. Die neuartige anorganische Formmasse erlaubt es, durch sich selbsthärtende Eigenschafen der Komponenten a) bis c) zusammen mit der Alkalisilikatlösung harte und standfeste Formkörper durch Härten bei geringen Temperaturen herzustellen, welche wenig schwinden und exakt eine gewollte Form einhalten.

2

Der hergestellte Formkorper kann bei 100 bis 550°C oder ggf. höheren Temperaturen von nicht gebundenem Wasser befreit werden. Es ist möglich, ggf. durch Behandlung mit Gasen wie NO, NO/CO, Sauerstoff, Wasserstoff o. dgl., bei erhöhten Temperaturen, z.B. im Bereich von 150 bis ggf. 1.200°C, die Katalysatoren zu aktivieren bzw. aus Vormaterialien den eigentlichen Katalysator zu bilden. Die Katalysator-Formkörper eignen sich — soweit erkennbar — für katalytische Zwecke aller Art und besitzen vielfach eigene katalytische Aktivität. Durch Schaumporen bzw. Hohlräume können die Katalysator-Formkörper für Gase durchgängig bzw. für Gase oder Flüssigkeiten absorptionsfähig gestaltet werden, wobei der gesamte benötigte Temperaturbereich des Gebrauchs von beliebig niedrigen Temperaturen bis zur Erweichungstemperatur von Träger bzw. Katalysator nutzbr gemacht werden kann. Temperaturempfindliche Katalysatoren können in gleiche Weise in den Katalysator inkorporiert oder auf die Oberfläche aufgebracht werden, da die Formmasse schon bei 100°C, oder wenn erforderlich bereits bei Ziummertemperatur, härtbar ist.

Mit besonderem Vorteil ist auch die Verankerung der Katalysatoren auf der Oberfläche eines Granulats oder in Hohlkanälen des Formkörpers möglich, wozu dieselbe Formmasse mit ausreichend hoher Menge des darin verteilten Katalysators, z.B. durch Schlämmen oder mit Hilfe des genannten wash coats, auf die Oberfläche gebracht und ggf. gehärtet wird.

Zwar wurde von einem der beteiligten Erfinder bereits gemäß der deutschen Patentanmeldung P 35 12 586 ein Abgaskatalysator-Träger aus einer gleichartigen Formmasse vorgeschlagen, jedoch handelt es sich dort um einen reinen Träger, der durch Aufbringen von Edelmetallen auf der Oberfläche andersartig beschaffen ist und dessen Hohlkanäle durch Reaktion von Aluminium mit dem Alkali der Formmasse in anderer Art entstehen.

Die Katalysator-Formkörper enthalten allgemein 0,001 bis 80 Gew.-Teile, vorzugsweise 0,5 bis 25 Gew.-Teile Katalysator, bezogen auf das Gewicht der Formkörper. Die äußere Form der Formkörper kann der beabsichtigten Verwendung der Katalysator-Formkörper angepaßt werden. Bevorzugt können die Formkörper Hohlkanäle enthalten, welche im wesentlichen parallel zueinander angeordnet sind. Weiterhin vorzugsweise sind 0,1 bis 70 Hohlkanäle pro cm² Querschnittsfläche vorgesehen. Die Formkörper können auch aus parallel zueinander angeordneten Rohrabschnitten bestehen. Weiterhin können die Formkörper in Form einer losen Schüttung von Granulat, Pelets, Ringen o. dgl. benutz werden. Insbesondere ist es vorgesehen, aus der Formmasse auf dem Wege der Strangextrusion Formkörper mit enthaltenen Hohlkanälen, welche ggf. durch Stege unterteilt sind, herzustellen, die die äußeren Abmessungen von Quadern mit paarweise parallelen Flächen besitzen, welche in rechteckigen Kammen praktisch lückenlos aufeinandergeschichtet werden und den geringsten Strömungswiderstand aufweisen. Ebenso sind Formkörper von der äußeren Form von Zylindern herstellbar.

Die Formkörper erreichen nach der Härtung Biegebruchfestigkeiten im Bereich von 10 bis 35 N/mm² oder ggf. mehr. Die Neigung zur Rißbildung oder Formschwindung ist äußerst gering.

Die Katalysator-Formkörper könen, wenn gewollt, Schaumporen enthalten. Dann werden der Formmasse Gase zugesetzt oder bevorzugt gasbildende Stoffe zugegeben, z.B. Peroxide wie Perborat, organische Peroxide oder $H_2O_2$ mit Zersetzungstemperaturen zwischen Zimmertemperatur und der Härtungstemperatur. Auch die Zugabe von feinem Aluminiumpulver ist möglich. Offene Schaumporen sind dadurch erzielbar, daß die Schäumung in der noch flüssigen Katalysator-Masse erfolgt und durch eine Vakuum-Behandlung vor der Härtung schwammartige Mikroporen oder feine Hohlkanäle gebildet werden.

In der Formmasse ist eine besondere feste Reaktionskomponente als mit der Alkalisilikatlösung steinbildende Komponente enthalten, welche aus besonderen Materialien auszuwählen ist. Folgende feste, steinbildende Reaktionskomponenten sind verwendbar:

Geeignet ist ein Oxid-Gemisch, welches als Ofenfilterstaub der Korund- oder Mullitherstellung gewonnen wird mit Gehalten an amorphem $SiO_2$ von 7 bis 75 Gew.-% und meist kristallinem $Al_2O_3$ in Mengen von 12 bis 87 Gew.-% und geringen Gehalten weiterer Bestandteile. Weiterhin geeignet ist kalzinierter Bauxit mit Gehalten von 0 bis 30 Gew.-% $SiO_2$ und 50 bis 70 Gew.-% $Al_2O_3$ neben von der Herkunft abhängigen Anteilen anderer Oxide, insbesondere Eisenoxid. Geeignet ist weiter Elektrofilterasche, welche bei staubförmiger Abscheidung in den Elektrofilter von Hochtemperatur-Steinkohle-Kraftwerken mit Brennkammertemperaturen von über 1.600°C entsteht. Elektrofilterasche dieser Art ist glasartig amorph und enthält 45 bis 55 Gewl.% $SiO_2$ als Glas neben $Al_2O_3$ und ggf. 8 bis 11 Gew.-% $Fe_2O_3$.

Die Alkalisilikatlösung ist eine Natriumsilikatlösung oder sehr bevorzugt eine Kaliumsilikatlösung mit dem Molverhältnis $SiO_2:K_2O$ bzw. $Na_2O$ von 1:0 bis 2,5:1, hergestellt aus Alkaliwasserglas oder bevorzugt festem oder gelöstem Alkalihydroxid und amorphem gefälltem $SiO_2$ mit Feststoffgehalten von ca. 35 bis 65 Gew.-%. Füllstoffe können in feingemahlener Form in Mengen von 0,5 bis 6 Gew.-Teilen je Gew.-Teil der festen Reaktionskomponente eingesetzt werden.

Als Füllstoffe kommen beispielsweise Quarzmehl, Quarzsand, Aluminiumoxid, Aluminiumhydroxid, Magnesiumoxid oder -hydroxid, Talkum oder weitere inerte Stoffe in Frage sowie Elektrofilterasche oder kalzinierter Bauxit, welche sich im Überschuß inert verhalten.

Die Herstellung der Formmasse erfolgt z.B. durch Vermischung der feingemahlenen festen Bestandteile der Formmasse und des Katalysators bzw. dieser Vorstufe in feinverteilter Form mit der Alkalisilikatlösung, ggf. weiteren Mengen Alkali und ggf. Wasser unter Rühren oder Kneten, wobei ggf. eine Kühlung erforderlich ist.

Der Wassergehalt richtet sich nach der Art der beabsichtigten Verarbeitung und ist im allgemeinen so hoch, daß gerade die freie Fließbarkeit im Falle eines Gießens in Formen oder die Fließfähigkeit bzw. Extrudierbarkeit der Formmasse in den jeweiligen Formaggregaten erreicht wird. Die Formmassen haben die Eigenschaft, nach Aufhören von Rührung oder Krafteinwirkung bei der Formgebung in kurzer Zeit zu Formkörpern zu erstarren, deren Festigkeit zunächst zu einer Entformung ausreichend ist, bis die eigentliche Härtung durch Temperatureinwirkung oder sogar nur durch den Ablauf einer Eigenhärtung erfolgt.

Die Herstellung der Katalysator-Formkörper erfolgt nach bekannten Verfahren wie Gießen, Pressen, Stanzen oder Extrudieren. Bevorzugt wird dabei ein Katalysator-Formkörper mit parallelen Hohlkanälen, deren Anzahl in Abhängigkeit vom Verwendungszweck bei Automobil-Abgaskatalysatoren 20 bis 100/cm² Querschnittsfläche und bei Kraftwerks-Abgaskatalysatoren 1 bis 500 je 100 cm² Querschnittsfläche beträgt. Die Herstellung erfolgt dabei bevorzugt durch Extrusion der Formmasse unter Verwendung eines geeigneten Extrusions-Mundstückes zu Formkörpern mit parallelen Hohlkanälen. Ein Gießwerkzeug wird bevorzugt eingesetzt, wenn im Katalysator ein poriges Gefüge vorliegen soll.

Anhand der Figuren wird im Folgenden die Herstellung von Katalysator-Formkörpern gemäß der Erfindung näher beschrieben.

Es zeigen dabei

Figur 1 — ein Extrusions-Mundstück in Rippenbauweise,

Figur 2 — einen Schnitt durch ein Extrusions-Mundstück gemäß Figur 1,

Figur 3 — einen Schnitt eines Katalysator-Formkörpers,

Figur 4 — Ansicht eines Katalysator-Formkörpers mit Einzelheiten A und B,

Figur 5 — ein Extrusions-Mundstück in Scheibenbauweise,

Figur 6 — ein Gießwerkzeug,

Figur 7 — einen Katalysator-Formkörper, hergestellt durch Gießen.

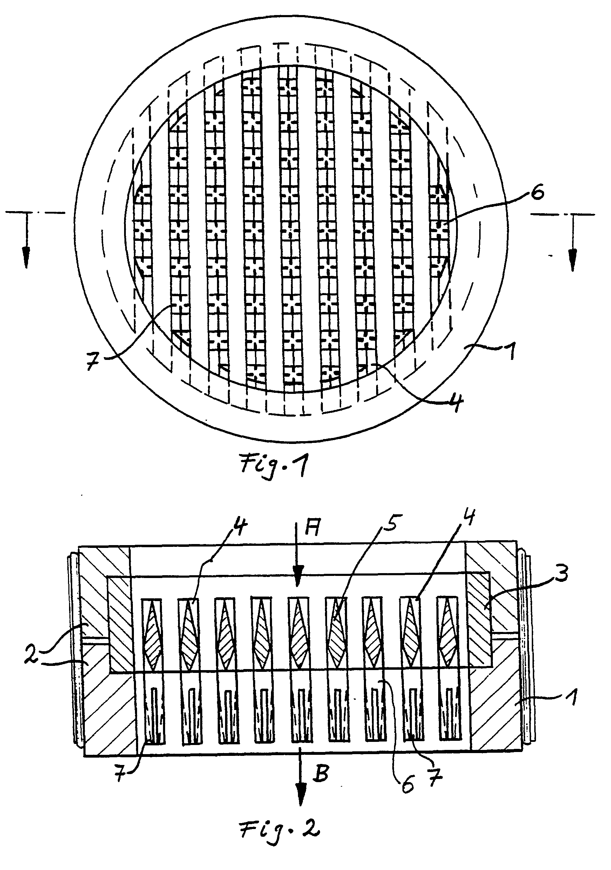

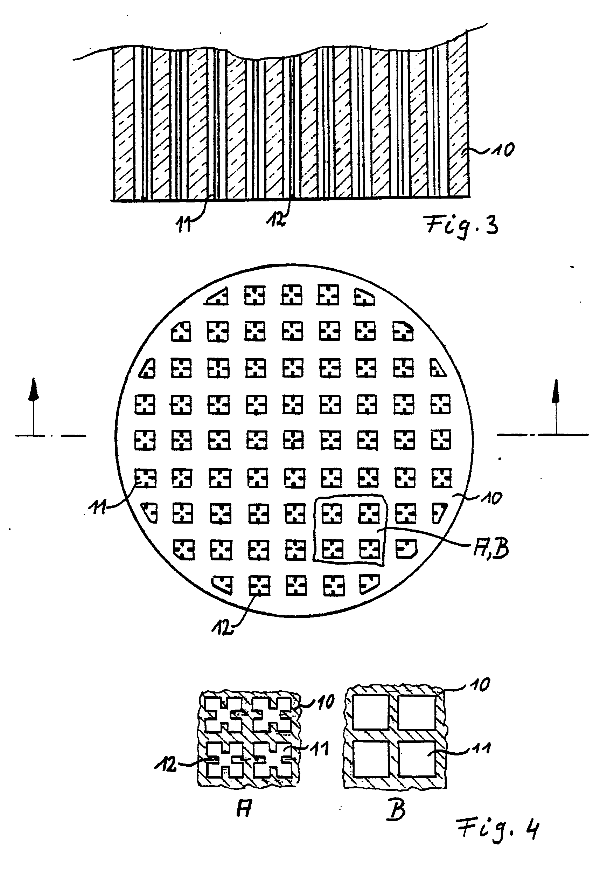

Bei der Herstellung von Katalysator-Formkörpern durch Extrusion wird ein Extrusions-Mundstück gemäß den Figuren 1 und 2 bevorzugt. Das Extrusions-Mundstück 1 besteht dabei aus den zweiteiligen Grundkörpern 2, der Rippenhalterung 3 und den Rippen 4. Die Rippen 4 sind dabei in entsprechende Schlitze der Rippenhalterung 3 eingesetzt. Sie können bei Bedarf einzeln ausgewechselt werden. Die Rippen 4 sind im Bereich 5 strömungsgünstig geformt, um der am Eintritt A eintretenden Masse einen geringen Widerstand entgegenzusetzen.

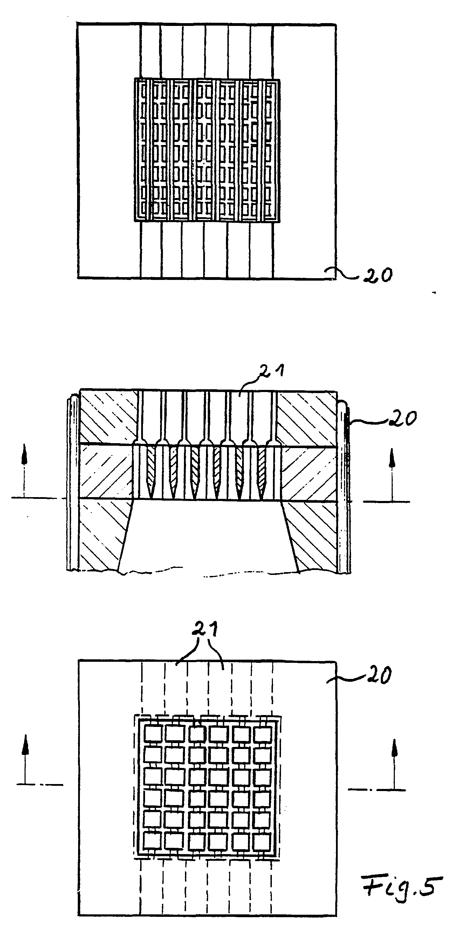

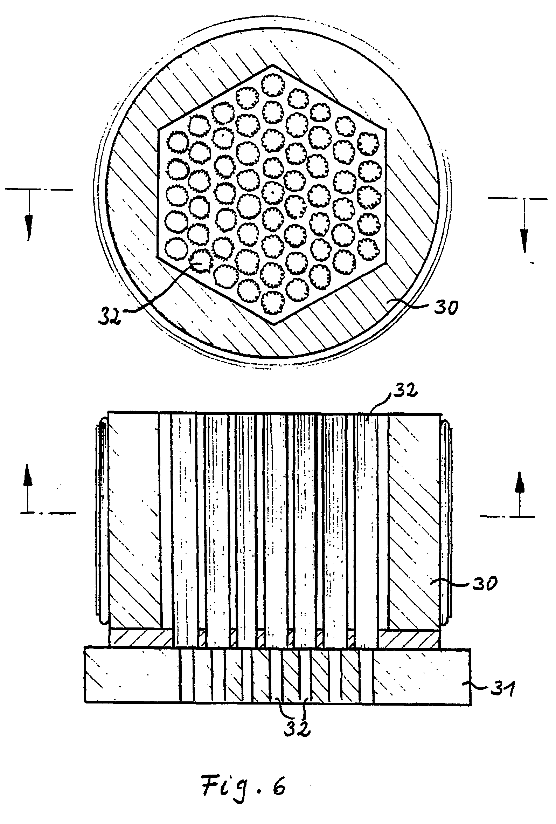

Die Rippen 4 sind mit Querschlitzen versehen, so daß die Stifte 6 mit z.B. quadratischem oder serchseckigem Querschnitt gebildet werden. Die Stifte 6 sind ggf. nochmals geschlitzt oder weisen zusätzliche Einkerbungen 7 auf. Die Rippen 4 und die Stifte 6 formen beim Durchfluß der Extrusiosmasse von der Eintrittsseite A zur Austrittsseite B den Katalysator 10 (Figur 3 bis 4) mit parallelen Hohlkanälen 11.

Die Herstellung der Rippen 4 erfolgt voreilhaft durch Senkerudieren (Fadenerudieren). Es ist jedoch auch möglich, Extrusionswerkzeuge entsprechend der DE—OS 22 54 563 oder der DE—A— 22 22 468 einzusetzen. Vorteilhaft wird das Werkzeug dabei jedoch aus mehreren Scheiben zusammengesetzt, um deren einzelne Auswechselbarkeit, z.B. bei Verschleiß, zu gewährleisten.

Figur 3 stellt einen extrudierten Katalysator-Formkörper 10 dar, der mit einem Extrusions-Mundstück 1 hergestellt würde. Die parallelen Hohlkanäle 11 können dabei zusätzliche Rippen 12 aufweisen, oder glattwandig ausgeführt sein (Einzelheit B). Die Extrusions-Mundstücke können ggf. ganz oder teilweise beheizt oder gekühlt werden. Durch geeignete Temperatureinwirkung kann dem Formkörper schon im Extrusions-Mundstück eine Anfangsfestigkeit gegeben werden. Vorteilhaft wird dem Mundstück ein Kalibrierkörper nachgeschaltet. Bei temperaturempfindlichen Massen wird der Rohkörper erst in der Kalibriereinrichtung durch Temperatureinwirkung angehärtet. Der Anfangsbereich der Kalibrierung ist dann kühlbar eingerichtet, um den Härteprozeß des Rohkörpers im Mundstück zu verhindern. Bei Einsatz gekühlter und beheizter Bereiche im Extrusions-Mundstück und/oder in der Kalibrierzone ist vorteilhaft eine Wärmesperre vorzusehen.

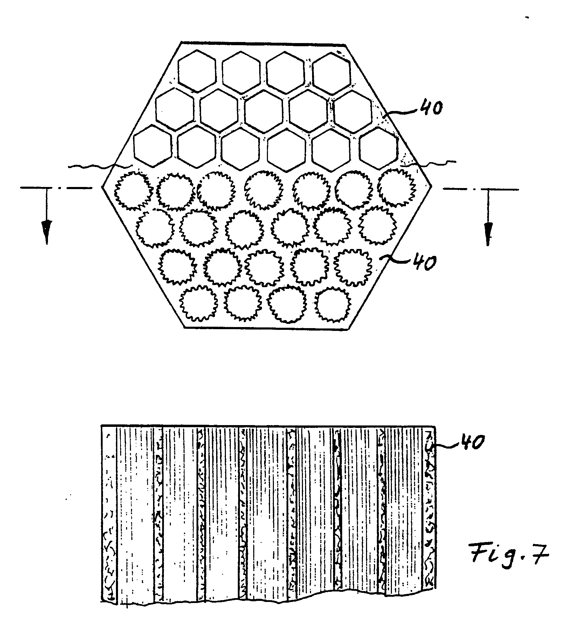

Figur 5 zeigt ein Extrusions-Mundstück 20 in Scheibenbauweise für einen Autokatalysator von der Eingangsseite, im Schnitt und von der Austrittsseite. Die strömungsgünstig geformten Scheiben 21 sind dabei einzeln auswechselbar.

In Figur 6 ist eine Gießform 30 zur Herstellung gegossener Katalysator-Formkörper dargestellt. In den Grundkörper 31 sind dabei eine größere Anzahl, vorzugsweise konisch zulaufender Formeinsätze 32 eingesetzt, die die späteren Hohlkanäle des gegossenen Katalysators 40 formen. Die Formeinsätze 32 können dabei vorzugsweise wabenförmig, aber auch mit unregelmäßiger Oberfläche ausgebildet werden.

In Figur 7 ist der gegossene Formkörper 40 in der Ansicht und im Querschnitt dargestelit.

Beispiel 1

Eine kalialkalische Silikatlösung, hergestellt durch Auflösen gefällter Kieselsäure in Kaliumhydroxidlösung mit einem Molverhältnis von 1,8 $SiO_2$/1 $K_2O$ und 43 Gew.-% Wassergehalt, wird in einer kontinuierlichen Mischapparatur einer Feststoffvormischung aus 40 Gew.-% Ofenfilterstaub aus der Korundfertigung (enthaltend ca. 9 Gew.-% $SiO_2$ und ca. 87 Gew.-% $Al_2O_3$), 40 Gew.-% $Al(OH)_3$ und 20 Gew.-% Quarzmehl zudosiert und die erhaltene Mischung, die ca. 30 Gew.-% der Silikatlösung enthält, in einer Schneckenpresse durch Vakuum entlüftet, anschließend durch ein Viellochwerkzeug extrudiert, durch IR-Strahler die Grünfestigkeit erhöht und der erhaltene Formkörper bei 85°C gehärtet.

Durch Brennen mit stufenweiser Temperaturerhöhung auf 1.200°C werden temperaturbeständige Formkörper erzeugt, die anschließend in bekannter Weise mit wash coat versehen und mit Katalysatoren dotiert werden.

### Beispiel 2

Eine Mischung entsprechend Beispiel 1, jedoch mit erhöhtem Wassergehalt von 36 Gew.-% wird mit Hilfe eines Gießwerkzeuges verformt, durch Wärmezufuhr angehärtet, bei 3 bar in Wasserdampfatmosphäre ausgehärtet und anschließend, wie in Beispiel 1 beschrieben, gebrannt.

### Beispiel 3

Ofenfilterstaub der Mullitfertigung mit ca. 20 Gew.-% $SiO_2$-Gehalt und ca. 75 Gew.-% $Al_2O_3$-Gehalt in einer Menge von 2 kg wird mit 2 kg kalziniertem Bauxit und 1 kg Talkum homogen gemischt und mit 2 kg einer kalialkalischen Silikatlösung mit 50 Gew.-% Feststoffgehalt und einem molaren Verhältnis $SiO_2$:$K_2O$ von 1,5:1 zu einer homogenen Masse geknetet, zuletzt mit 0,3 Gew.-% Wasserstoffperoxid versetzt und durch ein Viellochwerkzeug gepreßt. Unter Eigenerwärmung entsteht ein leicht geschäumter Formkörper mit vergrößerter Oberfläche in den Wänden der Kanäle, der nach Härtung bei 60°C zu einem Keramikkörper bei Temperaturen von 1.450°C gebrannt wird.

### Beispiel 4

Der geschäumte Formkörper nach Beispiel 3 wird bei 60°C gehärtet und darauf mit einer Katalysatorlösung getränkt und bei Temperaturen von 900°C gebrannt.

### Beispiel 5

Ofenfilterstaub der Korundherstellung, enthaltend 8 Gew.-% amorphes $SiO_2$, 89 Gew.-% $Al_2O_3$ und geringe Mengen von kristallinem $SiO_2$, $Fe_2O_3$ und Alkalioxiden wird in einer Menge von 2 kg mit 1,5 kg kalziniertem $Al_2O_3$ und 1 kg Talkum sowie 0,4 kg eines Katalysators homogen gemischt und anschließend mit 2 kg einer Lösung von amorphem, gefälltem Siliciumdioxid in Kaliumhydroxidlösung mit einem Molverhältnis von $SiO_2$:$K_2O$ von 1,75:1 und ca. 45% Wassergehalt intensiv durchgeknetet unter Kühlung. Die homogenisierte Masse wird zu einem Strang geformt und zu Granulat geschnitten, anschließend in ca. 30 Minuten bei 80°C gehärtet. Bei Erhöhung des Wassergehaltes entsteht eine gießfähige Formmasse.

### Beispiel 6

Ofenfilterstaub der Mullitherstellung, enthaltend 56 Gew.-% $Al_2O_3$ und 38 Gew.-% größtenteils amorphes $SiO_2$ neben geringen Anteilen anderer Schwermetall- und Alkalimetalloxiden wird in einer Menge von 1,5 kg mit 2 kg $Al(OH)_3$ und 1 kg Talkum homogen vermischt, mit 1,5 kg einer kaliumalkalischen Kaliwasserglaslösung mit 50 Gew.-% Feststoffgehalt und einem Molverhältnis von 1,5 $SiO_2$:1 $K_2O$ geknetet unter Kühlung, dann ebenfalls unter Kühlung in einer Strangpresse mit einem Werkzeug gemäß Figur 1/2 zu mit Kanälen versehenen Formkörpern verformt und nach kurzer Infrarotvorhärtung in einem Autoklav bei einem Wasserdampfdruck von 3 bar in etwa 10 Minuten gehärtet und anschließend, wie in Beispiel 1 beschrieben, mit dem Katalysator dotiert. Durch die größere Oberfläche ist die Katalysatorwirkung besser als gemäß Beispiel 5. Der zu verformenden Masse kann auch wahlweise ein Katalysatormaterial in Mengen von 0,01 bis 0,3 kg zugesetzt werden.

### Beispiel 7

0,5 kg Ofenfilterstaub wie in Beispiel 5 werden mit 1,5 kg feingemahlenem kalziniertem Bauxit, 1 kg Quarzmehl und 0,5 kg Talkum sowie 0,2 kg eines Katalysatormaterials vorgemischt, dann mit einer Lösung gemäß Beispiel 5 in einer Menge von 3,8 kg unter Kühlung geknetet, zu Granulat verformt und kurz bei 50°C gehärtet.

**Patentansprüche**

1. Katalysator-Formkörper, bestehend aus in einem anorganischen Formkörper homogen verteilten Katalysator oder einem auf die Oberfläche aufgebrachten Katalysator, entstanden aus einer preßfähigen oder fließfähigen Formmasse aus

   a) einem Oxid-Gemisch mit Gehalten von amorphem $SiO_2$ und Aluminiumoxid und/oder

   b) Elektrofilterasche aus Hochtemperatur-Steinkohle-Kraftwerken und/oder

   c) kalziniertem gemahlenem Bauxit
in Mengen von 0,5 bis 4,0 Gew.-Teilen der feinteiligen Komponenten a) bis c) je Gew.-Teil einer Alkalisilikatlösung mit Gehalten von 1,2 bis 2,5 Mol gelösten $SiO_2$ je Mol $K_2O$ bzw. $Na_2O$ sowie ggf. feinteiligen Füllstoffen durch Gießen in eine Form bzw. Pressen oder Extrudieren und Härten der Formmasse bei Temperaturen von 50 bis 95°C zu Formkörpern.

2. Katalysator-Formkörper nach Anspruch 1, enthaltend 0,5 bis 25 Gew.-Teile Katalysator, bezogen auf 100 Gew.-Teile Feststoffgehalt der Formmasse.

3. Katalysator-Formkörper nach den Ansprüchen 1 oder 2, enthaltend im wesentlichen zueinander parallele Hohlkanäle.

4. Katalysator-Formkörper nach Anspruch 3, gekennzeichnet durch 1 bis 500 Hohlkanäle/100 $cm^2$ Querschnittsfläche bei Kraftwerkskatalysatoren oder 20 bis 100 Hohlkanäle/$cm^2$ Querschnittsfläche bei Automobilkatalysatoren.

5. Katalysator-Formkörper nach den Ansprüchen 1 oder 2 in Form von Granulaten, Pellets o. dgl.

6. Katalysator-Formkörper nach einem der vorangehenden Ansprüche, gekennzeichnet durch enthaltene Schaumporen.

7. Katalysator-Formkörper mit enthaltenen Hohlkanälen nach einem der vorangehenden Ansprüche, hergestellt durch Strangextrusion mittels Extrusionsmundstücken.

8. Katalysator-Formkörper nach einem der vorangehenden Ansprüche, gekennzeichnet durch Abwesenheit von freiem Wasser durch Temperaturbehandlung bei 100 bis 550°C in Luft oder Inertgas und/oder Brennen nach der Härtung.

9. Verfahren zur Herstellung von Katalysator-Formkörpern nach einem der vorangehenden Ansprüche, dadurch gekennzeichnet, daß eine wasserhaltige, anorganische Formmasse, ggf. mit Gehalten des Katalysators aus

a) einem Oxid-Gemisch mit Gehalten von amorphem $SiO_2$ und Aluminiumoxid und/oder

b) Elektrofilterasche aus Hochtemperatur-Steinkohle-Kraftwerken und/oder

c) kalziniertem gemahlenem Bauxit

in Mengen von 0,5 bis 4,0 Gew.-Teilen der feinteiligen Komponente a) bis c) je Gew.-Teil einer Alkalisilikatlösung mit Gehalten von 1,2 bis 2,5 Mol gelöstem $SiO_2$ je Mol $K_2O$ bzw. $Na_2O$ sowie ggf. feinteiligen Füllstoffen gepreßt oder extrudiert oder in fließfähigem Zustand in eine Form gegossen und bei Temperaturen von 50 bis 95°C gehärtet wird.

10. Verfahren nach Anspruch 9, dadurch gekennzeichnet, daß die Härtung bei Drücken von 2 bis 5 bar, ggf. in Wasserdampfatmosphäre, erfolgt.

11. Verfahren nach Anspruch 9 oder 10, gekennzeichnet durch Temperaturbehandlung bei 100 bis 550°C in Luft oder Inertgas nach der Härtung.

12. Verfahren nach Anspruch 9 oder 10, gekennzeichnet durch Brennen bei Temperaturen von 600 bis 1550°C nach der Härtung.

13. Verfahren nach einem der Ansprüche 9 bis 12, dadurch gekennzeichnet, daß als Alkalisilikatlösung eine kalialkalische Kaliumsilikatlösung verwendet wird.

14. Verfahren zur Herstellung von Katalysatoren nach einem der Ansprüche 9 bis 12, dadurch gekennzeichnet, daß ein Formkörper mit im wesentlichen zueinander parallelen Hohlkanälen durch die Verfahrensweise der Strangextrusion aus der Formmasse hergestellt, in Abschnitte geteilt, getrocknet und gehärtet wird.

15. Verfahren nach Anspruch 14, dadurch gekennzeichnet, daß ein Extrusionsmundstück mit enthaltenden Rippen (4) und ggf. nachgeschalteten Stiften (6) bei der Formgebung verwendet wird.

**Revendications**

1. Corps catalyseur, composé d'un catalyseur réparti de façon homogène dans un corps profilé inorganique ou d'un catalyseur appliqué sur la surface, obtenu à partir d'une matière moulable pressable ou fluide constituée par

a) un mélange d'oxyde contenant du $SiO_2$ amorphe et de l'oxyde d'aluminium et/ou

b) de la cendre d'électrofiltre provenant de centrales thermiques fonctionnant au charbon et/ou

c) de la bauxite calcinée et broyée,

dans des proportions de 0,5 à 4,0 parties en poids des composants a) à c) finement divisés par partie en poids d'une solution de silicate alcalin contenant de 1,2 à 2,5 moles de $SiO_2$ dissous par mole de $K_2O$ ou $Na_2O$, ainsi qu'éventuellement des charges finement divisées, par moulage dans un moule, pressage ou extrusion, puis durcissement de la matière moulable, à des températures de 50 à 95°C, ce qui donne un corps façonné.

2. Corps catalyseur selon la revendication 1, comprenant de 0,5 à 25 parties en poids de catalyseur, pour 100 parties en poids des matières solides contenues dans la matière moulable.

3. Corps catalyseur selon la revendication 1 ou 2, comportant des canaux creux sensiblement parallèles les uns aux autres.

4. Corps catalyseur selon la revendication 3, caractérisé par 1 à 500 canaux creux/100 $m^2$ de surface pour les catalyseurs de centrales ou 20 à 100 canaux creux/$cm^2$ de surface pour les catalyseurs pour voitures automobiles.

5. Corps catalyseur selon la revendication 1 ou 2 en forme de granulés, boulettes ou analogues.

6. Corps catalyseur selon l'une des revendications précédentes, caractérisé par des pores moussés incorporés.

7. Corps catalyseur comportant des canaux creux incorporés selon l'une des revendications précédentes, fabriqué par extrusion au moyen d'orifices de filière d'extrusion.

8. Corps catalyseur selon l'une des revendications précédentes, caractérisé par l'absence d'eau libre grâce à un traitement thermique à des températures de 100 à 550°C dans l'air ou un gaz inerte et/ou à une cuisson aprés le durcissement.

9. Procéde de fabrication de corps catalyseurs selon l'une des revendications précédentes, caractérisé par le fait qu'une matière moulable inorganique et aqueuse, contenant éventuellement du catalyseur et constituée par

a) un mélange d'oxydes contenant du $SiO_2$ amorphe et de l'oxyde d'aluminium et/ou

b) des cendres d'électrofiltres provenant des centrales thermiques au charbon, fonctionnant à hautes températures, et/ou

c) de la bauxite calcinée et broyée,

dans des proportions de 0,5 à 4,0 parties en poids des composants a) à c) finemenet divisés par partie en poids d'une solution de silicate alcalin contenant de 1,2 à 2,5 moles de $SiO_2$ dissous par mole de $K_2O$ ou de $Na_2O$, ainsi qu'éventuellement des charges finement divisées, est pressée ou extrudée ou encore moulée à l'état liquide, puis durcie à des températures de 50 à 95°C.

10. Procéde selon la revendication 9, caractérisé par le fait que le durcissement s'effectue à des pressions de 2 à 5 bars, éventuellement dans une atmosphère de vapeur d'eau.

11. Procéde selon la revendication 9 ou 10, caractérisé par un traitement thermique à des températures de 100 à 550°C dans l'air ou un gaz inerte après le durcissement.

12. Procéde selon la revendication 9 ou 10, caractérisé par une cuisson à des températures de 600 à 1550°C après le durcissement.

13. Procéde selon l'une des revendications 9 à 12, caractérisé par le fait que, comme solution de silicate alcalin, on utilise une solution alcaline de silicate de potassium.

14. Procédé de fabrication de catalyseur selon l'une des revendications 9 à 12, caractérisé par le fait qu'à partir de la matière moulable, on fabrique un corps comportant des canaux creux sensiblement parallèles les uns aux autres par un procédé d'extusion, que l'on divise ce corps en sections, qu'on le sèche et qu'on le fait durcir.

15. Procéde selon la revendication 14, caractérisé par le fait que, pour le façonnage, on utilise un orifice de filière d'extrusion comportant des nervures (4) incorporées éventuellement des chevilles (6) montées en aval.

**Claims**

1. Catalyst bodies consisting of catalyst uniformly distributed in an inorganic shaped body or a catalyst applied to the surface, the shaped body being produced from a pressable or flowable mouldable composition formed of
   a) an oxide mixture with contents of amorphous $SiO_2$ and aluminium oxide and/or
   b) electrostatic filter ash from high temperature coal power stations and/or
   c) calcined ground bauxite
in amounts of 0.5 to 4.0 parts by weight of the finely divided component a) to c) per part by weight of an alkali silicate solution with contents of 1.2 to 2.5 mole of dissolved $SiO_2$ per mole $K_2O$ or $Na_2O$, as well as optionally finely divided fillers, by casting in a mould or by pressing or by extruding and hardening of the moulding compositions at temperatures of 50 to 95°C to form shaped bodies.

2. Catalyst bodies according to claim 1, containing 0.5 to 25 parts by weight of catalyst related to 100 parts by weight of the solids conent of the moulding composition.

3. Catalyst bodies according to claims 1 or 2, containing hollow channels essentially parallel to one another.

4. Catalyst bodies according to claim 3, characterised by 1 to 500 hollow channels per 100 cm² of cross-sectional area in power station catalysts or 20 to 100 hollow channels per cm² cross-sectional area in automobile catalysts.

5. Catalysts bodies according to claims 1 or 2 in the form of granulates, pellets etc.

6. Catalyst bodies according to one of the foregoing claims, characterised by foam pores contained therein.

7. Catalyst bodies with hollow channels contained therein according to one of the preceding claims, produced by extrusion by means of extrusion die elements.

8. Catalyst bodies according to one of the preceding claims, characterised by absence of free water as a result of temperature treatment at 100 to 550°C in air or inert gas and/or firing after the hardening.

9. Process for the production of catalyst bodies according to one of the preceding claims, characterised in that a water-containing inorganic moulding composition of,
   a) an oxide mixture with contents of amorphous $SiO_2$ and aluminium oxide and/or
   b) electrostatic filter ash from high temperature coal power stations and/or
   c) calcined ground bauxite
in amounts of 0.5 to 4.0 parts by weight of finely divided components a) to c) per parts by weight of an alkali silicate solution with contents of 1.2 to 2.5 mole of dissolved $SiO_2$ per mole of $K_2O$ or $Na_2O$, as well as optionally finely divided fillers, optionally with contents of the catalyst is pressed or extruded or poured in flowable condition into a mould and hardened at temperatures of 50 to 95°C.

10. Process according to claim 9, characterised in that the hardening takes place at pressures of 2 to 5 bar, optionally in steam atmospheres.

11. Process according to claim 9 or 10, characterised by temperature treatment at 100 to 550°C in air or inert gas after the hardening.

12. Process according to claim 9 or 10, characterised by firing at temperatures of 600 to 1500°C after the hardening.

13. Process according to one of claims 9 to 12, characterised in that a potash alkaline potassium silicate solution is used as alkali silicate solution.

14. Process for the production of catalysts according to one of claims 9 to 12, characterised in that a shaped body is produced with hollow channels essentially parallel to one another by the procedure of extrusion from the moulding composition, divided into sections, dried and hardened.

15. Process according to claim 14, characterised in that an extrusion die element with ribs (4) therein and optionally pins (6) connected thereto is used in the shaping.

Fig. 1

Fig. 2

1

Fig. 3

Fig. 4

20

21

20

21

20

Fig.5

Fig.6

40

40

40

Fig.7